# EUROPEAN PATENT SPECIFICATION

(11) **EP 4 239 828 B1**
(45) Date of publication and mention of the grant of the patent: **31.12.2025**
(21) Application number: 21957165.0
(22) Date of filing: 18.09.2021
(51) Int. Cl.: B60L 58/12, H02J 7/00, H02J 7/34, B60L 58/20, B60L 58/21

(54) **CHARGING METHOD, CHARGING DEVICE AND CHARGING SYSTEM FOR POWER BATTERY**
LADEVERFAHREN, LADEVORRICHTUNG UND LADESYSTEM FÜR EINE LEISTUNGSBATTERIE
PROCÉDÉ DE CHARGE, DISPOSITIF DE CHARGE ET SYSTÈME DE CHARGE POUR BATTERIE D'ALIMENTATION

(43) Date of publication of application: 06.09.2023
(73) Proprietor: Contemporary Amperex Technology (Hong Kong) Limited, Central, Central And Western District (HK)
(72) Inventor: CAI, Jinbo, Ningde, Fujian 352100 (CN); LOU, Qidong, Ningde, Fujian 352100 (CN); ZHANG, Wei, Ningde, Fujian 352100 (CN)
(74) Representative: Rowlands, Stuart Michael
(86) International application number: PCT/CN2021/119362
(87) International publication number: WO 2023/039888

(56) References cited:
- WO-A1-2021/122459
- CN-A- 102 832 657
- CN-A- 109 904 850
- CN-U- 210 760 300
- JP-A- 2013 102 563
- US-A1- 2018 093 583
- US-A1- 2020 001 730

## Description

### TECHNICAL FIELD

This application relates to the field of battery technologies, and in particular, to a charging method, charging apparatus, and charging system for traction battery.

### BACKGROUND

With the consumption of non-renewable energy and the urgent need for environmental protection, new energy electric vehicles using rechargeable batteries as a power source have been developing rapidly. At present, fast charging of a traction battery can be implemented by alternate charging and discharging. During discharging, an energy storage unit can be provided to receive electrical energy released by the traction battery. However, during charging of the traction battery, restricted by factors such as capacity of the energy storage unit, the charging efficiency of the traction battery cannot be further improved.

WO 2021/122459 A1 discloses a distributed charging system comprising a plurality of charging stations transportable by charging station transport trucks, wherein each charging station transport truck of the distributed charging system has at least one lifting mechanism adapted to lift at least one charging station deployed on a ground floor onto a transport platform of the charging station transport unit for transport to another location, wherein each transportable charging station has at least one battery pack with rechargeable battery cells adapted to store electrical energy which is used to charge batteries of electrically powered vehicles connected to charging stations deployed on the ground floor, wherein the housing of the portable charging station comprises a ground locking interface unit adapted to lock the charging station mechanically and/or electrically to a base frame of the distributed charging system installed on the ground floor.

US 2018/093583 A1 discloses a method to control a battery temperature includes: determining state difference information of a first battery, among batteries, based on state information of the first battery and average state information of the batteries; calculating a first output value of a first converter corresponding to the first battery based on the determined state difference information; and controlling a charging and discharging process of the batteries to cause the first converter to generate a power flow based on the calculated first output value.

US 2020/001730 A1 discloses a stationary storage device configured to temporarily store electric energy in an electric supply grid includes at least one electric storage unit, each being connected to a common DC bus by a respective DC-DC converter. The storage device further includes a bidirectionally operated AC-DC converter for coupling the common DC bus to the supply grid, and a charging device configured to exchange energy with an electrically operated motor vehicle. The charging device includes a connection device configured to connect the electrically operated motor vehicle in order to exchange said energy, and a charge control device configured to control exchange of said energy.

### SUMMARY

Embodiments of this application provide a charging method according to claim 1, charging apparatus according to claim 6, and charging system for traction battery according to claim 11, which can improve charging efficiency of traction batteries. Other aspects of the invention are set out in the dependent claims.

According to a first aspect, this application provides a charging method for traction battery, applied to a charging apparatus. The charging apparatus includes N energy storage units connected in parallel, where each energy storage unit includes an energy storage battery and a first DC/DC converter connected to the energy storage battery. Each charging period of the charging apparatus includes a stage in which the traction battery is charged and a stage in which the traction battery discharges to the N energy storage units, N being a positive integer greater than 1. The charging method includes: obtaining a first parameter of each energy storage unit in the discharge stage; determining, based on the first parameter, a first current output by the first DC/DC converter in each energy storage unit, where the first current output by the first DC/DC converter in each energy storage unit is inversely proportional to the first parameter of the energy storage unit; and sending a first control signal to the first DC/DC converter in each energy storage unit, where the first control signal is used to control the first DC/DC converter to output the first current, so as to cause the first DC/DC converter in each energy storage unit to receive, at the first current, electrical energy released by the traction battery.

In the embodiments of this application, fast charging of the traction battery is implemented by alternate charging and discharging. Because the charging apparatus includes a plurality of energy storage units connected in parallel, and each energy storage unit includes an energy storage battery and a first DC/DC converter connected to the energy storage battery, electrical energy discharged by the traction battery to each energy storage unit can be adjusted by controlling the output current of each first DC/DC converter. For example, the output current of the first DC/DC converter in each energy storage unit is adjusted based on the first parameter of the energy storage unit so that the output current is inversely proportional to the first parameter. This makes electrical energy received by each energy storage unit match its current electrical energy, avoiding energy mismatch between the energy storage units. In this way, capacity of the energy storage units is fully used, enabling the energy storage units to more efficiently receive electrical energy released by the traction battery, thereby improving the charging efficiency of the traction battery.

In a possible embodiment, the charging method further includes: obtaining the first parameter of each energy storage unit in the charge stage; determining, based on the first parameter, a second current output by the first DC/DC converter in each energy storage unit, where the second current output by the first DC/DC converter in each energy storage unit is proportional to the first parameter of the energy storage unit; and sending a second control signal to the first DC/DC converter in each energy storage unit, where the second control signal is used to control the first DC/DC converter to output the second current, so as to cause the first DC/DC converter in each energy storage unit to charge the traction battery at the second current.

In the foregoing embodiment, in the stage in which the traction battery is charged, the output current of the first DC/DC converter in each energy storage unit can be adjusted to be proportional to the first parameter, making the electrical energy provided by each energy storage unit better match its current electrical energy. This further implements full use of the capacity of the energy storage batteries, thereby improving the charging efficiency of the traction battery.

In a possible embodiment, the first parameter of each energy storage unit includes at least one of the following parameters: current state of charge (SOC) of the energy storage battery in each energy storage unit; current voltage of the energy storage battery in each energy storage unit; and current voltage of each energy storage unit.

In the foregoing embodiment, at least one of the current SOC of the energy storage battery in each energy storage unit, the current voltage of the energy storage battery in each energy storage unit, and the current voltage of each energy storage unit is selected as the first parameter, which can more directly reflect a current capacity state of the energy storage battery, from which the output current of the first DC/DC converter in each energy storage unit is determined.

In a possible embodiment, the charging apparatus further includes a separating unit. The separating unit is connected between the N energy storage units and the traction battery, where the separating unit includes M second DC/DC converters and a switch module connected between the M second DC/DC converters, M being a positive integer greater than or equal to 2.

In a possible embodiment, the charging method further includes: controlling the switch module to make the M second DC/DC converters connected in series, so that voltage output by the separating unit to the traction battery is M times voltage output by the N energy storage units; or controlling the switch module to make the M second DC/DC converters connected in parallel so that current output by the separating unit to the traction battery is M times current output by the N energy storage units.

The foregoing embodiment further provides a separating unit connected between the N energy storage units and the traction battery, where the separating unit includes M second DC/DC converters and a switch module connected between the M second DC/DC converters. A connection manner of the M second DC/DC converters can be changed by controlling the switch module, thereby implementing adjustment of an output side voltage and an output side current of the separating unit. When the switch module of the separating unit is controlled to make the M second DC/DC converters connected in series, the charging apparatus can charge the traction battery at a high voltage; and when the switch module of the separating unit is controlled to make the M second DC/DC converters connected in parallel, the charging apparatus can charge the traction battery at a high current.

In a possible embodiment, the charging apparatus in the foregoing charging method further includes an AC/DC converter, where the AC/DC converter is connected between the traction battery and an alternating current power supply, so as to cause the alternating current power supply to charge the traction battery via the AC/DC converter.

In the foregoing embodiment, the AC/DC converter is further connected between the traction battery and the alternating current power supply, where the AC/DC converter can convert alternating current output by the alternating current power supply into stable direct current, so as to charge the traction battery. When the traction battery is simultaneously charged by the energy storage battery and the alternating current power supply, charging time of the traction battery can be reduced, thereby further improving the charging efficiency.

According to a second aspect, an embodiment of this application further provides a charging apparatus for traction battery. The charging apparatus includes: N energy storage units connected in parallel, where each energy storage unit includes an energy storage battery and a first DC/DC converter connected to the energy storage battery, and each charging period of the charging apparatus includes a stage in which the traction battery is charged and a stage in which the traction battery discharges to the N energy storage units, N being a positive integer greater than 1; and the control module, configured to: obtain a first parameter of each energy storage unit in the discharge stage; determine, based on the first parameter, a first current output by the first DC/DC converter in each energy storage unit, where the first current output by the first DC/DC converter in each energy storage unit is inversely proportional to the first parameter of the energy storage unit; and send a first control signal to the first DC/DC converter in each energy storage unit, where the first control signal is used to control the first DC/DC converter to output the first current, so as to cause the first DC/DC converter in each energy storage unit to receive, at the first current, electrical energy released by the traction battery.

In the embodiments of this application, fast charging of the traction battery is implemented by alternate charging and discharging. Because the charging apparatus includes a plurality of energy storage units connected in parallel, and each energy storage unit includes an energy storage battery and a first DC/DC converter connected to the energy storage battery, electrical energy discharged by the traction battery to each energy storage unit can be adjusted by controlling the output current of each first DC/DC converter. For example, the output current of the first DC/DC converter in each energy storage unit is adjusted based on the first parameter of the energy storage unit so that the output current is inversely proportional to the first parameter. This makes electrical energy received by each energy storage unit match its current electrical energy, avoiding energy mismatch between the energy storage units. In this way, capacity of the energy storage units is fully used, enabling the energy storage units to more efficiently receive electrical energy released by the traction battery, thereby improving the charging efficiency of the traction battery.

In a possible embodiment, the control module is further configured to: obtain the first parameter of each energy storage unit in the charge stage; determine, based on the first parameter, a second current output by the first DC/DC converter in each energy storage unit, where the second current output by the first DC/DC converter in each energy storage unit is proportional to the first parameter of the energy storage unit; and send a second control signal to the first DC/DC converter in each energy storage unit, where the second control signal is used to control the first DC/DC converter to output the second current, so as to cause the first DC/DC converter in each energy storage unit to charge the traction battery at the second current.

In the foregoing embodiment, in the stage in which the traction battery is charged, the output current of the first DC/DC converter in each energy storage unit can be adjusted to be proportional to current electrical energy of the energy storage battery, making the electrical energy provided by each energy storage unit better match its current electrical energy. This further implements full use of the capacity of the energy storage batteries, thereby improving the charging efficiency of the traction battery.

In a possible embodiment, the first parameter of each energy storage unit includes at least one of the following parameters: current SOC of the energy storage battery in each energy storage unit; current voltage of the energy storage battery in each energy storage unit; and current voltage of each energy storage unit.

In the foregoing embodiment, at least one of the current SOC of the energy storage battery in each energy storage unit, the current voltage of the energy storage battery in each energy storage unit, and the current voltage of each energy storage unit is selected as the first parameter, which can more directly reflect a current capacity state of the energy storage battery, from which the output current of the first DC/DC converter in each energy storage unit is determined.

In a possible embodiment, the charging apparatus further includes a separating unit, where the separating unit is connected between the N energy storage units and the traction battery. The separating unit includes M second DC/DC converters and a switch module connected between the M second DC/DC converters, M being a positive integer greater than or equal to 2. The control module is further configured to: control the switch module to make the M second DC/DC converters connected in series, so that voltage output by the separating unit to the traction battery is M times voltage output by the N energy storage units; or control the switch module to make the M second DC/DC converters connected in parallel so that current output by the separating unit to the traction battery is M times current output by the N energy storage units.

The foregoing embodiment further provides a separating unit connected between the N energy storage units and the traction battery, where the separating unit includes M second DC/DC converters and a switch module connected between the M second DC/DC converters. A connection manner of the M second DC/DC converters can be changed by controlling the switch module, thereby implementing adjustment of an output side voltage and an output side current of the separating unit. When the switch module of the separating unit is controlled to make the M second DC/DC converters connected in series, the charging apparatus can charge the traction battery at a high voltage; and when the switch module of the separating unit is controlled to make the M second DC/DC converters connected in parallel, the charging apparatus can charge the traction battery at a high current.

In a possible embodiment, the charging apparatus further includes an AC/DC converter, where the AC/DC converter is connected between the traction battery and an alternating current power supply, so as to cause the alternating current power supply to charge the traction battery via the AC/DC converter.

In the foregoing embodiment, the AC/DC converter is further connected between the traction battery and the alternating current power supply, where the AC/DC converter can convert alternating current output by the alternating current power supply into stable direct current, so as to charge the traction battery. When the traction battery is simultaneously charged by the energy storage battery and the alternating current power supply, charging time of the traction battery can be reduced, thereby further improving the charging efficiency.

According to a third aspect, an embodiment of this application provides an EMS, including a processor, where the processor is configured to perform the method according to the first aspect and any possible embodiment of the first aspect.

According to a fourth aspect, an embodiment of this application provides a charging system, including a traction battery and the charging apparatus according to the second aspect or any possible embodiment of the second aspect, where the charging apparatus is configured to charge the traction battery, and each charging period includes a stage in which the traction battery is charged and a stage in which the traction battery discharges.

### BRIEF DESCRIPTION OF DRAWINGS

To describe technical solutions of embodiments of this application more clearly, the following briefly describes the accompanying drawings required for describing the embodiments of this application. It will be apparent that the accompanying drawings in the following description show merely some embodiments of this application, and persons of ordinary skill in the art may still derive other drawings from the accompanying drawings without creative efforts.
FIG. 1 is a schematic structural diagram of a charging system according to an embodiment of this application.
FIG. 2 is a schematic diagram of a charging period according to an embodiment of this application.
FIG. 3 is a schematic structural diagram of a charging apparatus according to an embodiment of this application.
FIG. 4 is a schematic flowchart of a charging method according to an embodiment of this application.
FIG. 5 is a schematic flowchart of a charging method according to another embodiment of this application.
FIG. 6 is a schematic structural diagram of a charging apparatus according to another embodiment of this application.
FIG. 7 is a schematic structural diagram of a charging apparatus according to yet another embodiment of this application.

### DESCRIPTION OF EMBODIMENTS

The following further describes implementations of this application in detail with reference to accompanying drawings and embodiments. The detailed description of embodiments and the accompanying drawings are intended to illustrate the principle of this application, rather than to limit the scope of this application, meaning that this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to specific orientations. These terms shall therefore not be construed as limitations on this application. In addition, the terms "first", "second", and "third", and the like are merely for the purpose of description and shall not be understood as any indication or implication of relative importance.

The orientation terms appearing in the following description all refer to the orientations as shown in the drawings, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the new energy field, a traction battery may be used as a major traction source for an electric apparatus such as a vehicle, a ship, or spacecraft, and an energy storage battery may be a charging source for the electric apparatus. The importance of the traction battery and the energy storage battery is taken for granted. As examples rather than limitations, in some application scenarios, the traction battery may be a battery in an electric apparatus, and the energy storage battery may be a battery in a charging apparatus.

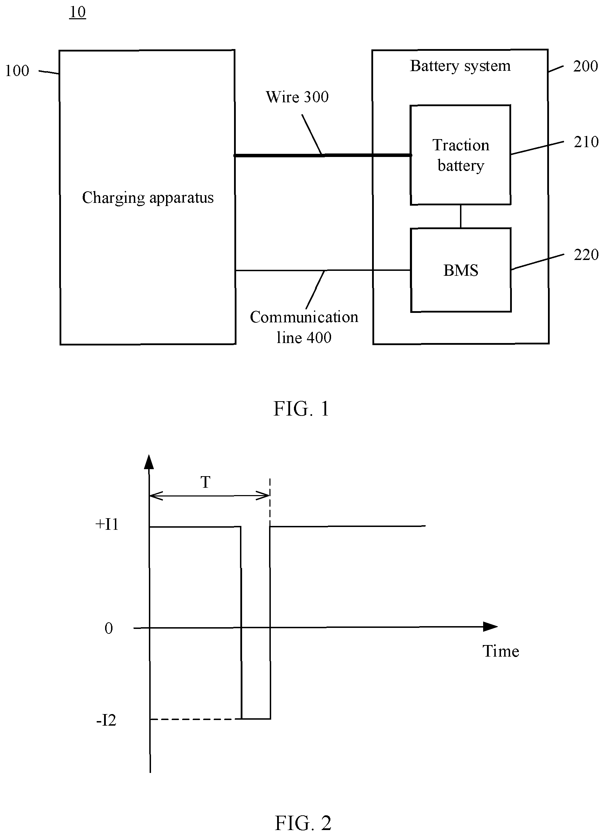

FIG. 1 is a schematic structural diagram of a charging system to which embodiments of this application are applicable.

As shown in FIG. 1, the charging system 100 may include a charging apparatus 100 and a battery system 200. Optionally, the battery system 200 may be a battery system in an electric vehicle (including a battery electric vehicle and a plug-in hybrid electric vehicle) or a battery system in another application scenario.

Optionally, the battery system 200 may be provided with at least one battery pack, and the at least one battery pack as a whole may be collectively referred to as a traction battery 210. In terms of category, the traction battery 210 may be a battery of any type, including but not limited to a lithium-ion battery, a lithium metal battery, a lithium-sulfur battery, a lead-acid battery, a nickel-cadmium battery, a nickel-metal hydride battery, or a lithium-air battery. In terms of scale, the traction battery 210 in the embodiments of this application may be a cell (battery cell), or may be a battery module or a battery pack, where the battery module or battery pack may be formed by a plurality of batteries connected in series or parallel. In the embodiments of this application, a specific type and scale of the traction battery 210 are not specifically limited.

In addition, in order to intelligently manage and maintain the traction battery 210 to prevent overcharging and overdischarging of the battery and extend service life of the battery, the battery system 200 is generally further provided with a battery management system (BMS) 220 for monitoring a state of the traction battery 210. Optionally, the BMS 220 may be integrated with the traction battery 210 in a same device or apparatus, or the BMS 220 may be disposed outside the traction battery 210 as a separate device/apparatus.

Specifically, the charging apparatus 100 is an apparatus that supplements electrical energy to the traction battery 210 in the battery system 200.

Optionally, the charging apparatus 100 in the embodiments of this application may be a common charging pile, a super charging pile, a charging pile supporting vehicle to grid (V2G) mode, a charging apparatus or device capable of charging batteries, or the like. A specific type and specific application scenario of the charging apparatus 100 are not limited in the embodiments of this application.

Optionally, as shown in FIG. 1, the charging apparatus 100 may be connected to the traction battery 210 through a wire 300 and connected to the BMS 220 through a communication line 400. The communication line 400 is used for information exchange between the charging apparatus 100 and the BMS 220.

In an example, the communication line 400 includes but is not limited to a controller area network (CAN) communication bus or a daisy chain communication bus.

Optionally, in addition to communicating with the BMS 220 through the communication line 400, the charging apparatus 100 can also communicate with the BMS 220 through a wireless network. Types of communication between the charging apparatus and the BMS 220 are not specifically limited in the embodiments of this application.

When a conventional charging method is used for continuously charging the traction battery 210, subject to accumulation of lithium ions at a negative electrode of the battery in the continuous charging process, charging current is also limited. As a result, continuous high current cannot be used for rapid charging of the battery. To implement fast charging of the traction battery 210, in the embodiments of this application, alternate charging and discharging is implemented for the traction battery 210 to fast charge the traction battery 210.

For example, as shown in FIG. 2, one charging period T includes a stage in which the traction battery 210 is charged and a stage in which the traction battery 210 discharges. In the stage in which the traction battery 210 is charged, a charging current is +I1; and in the stage in which the traction battery 210 discharges, a charging current is -I2. After the traction battery 210 is charged at a high current, the traction battery 210 discharges so as to release the lithium ions accumulated at the negative electrode of the traction battery 210 during charging, avoiding lithium precipitation, heating, and the like of the traction battery 210. Therefore, the traction battery 210 can later be charged again at a high current, thereby implementing fast charging of the traction battery 210.

An energy storage unit is provided in the charging apparatus 100 in the embodiments of this application. The energy storage unit is configured to receive electrical energy released by the traction battery 210 in the discharge stage. The energy storage unit is, for example, an energy storage battery, where capacity of the energy storage battery directly affects the electrical energy that the traction battery 210 can release. To increase the capacity of the energy storage battery, the energy storage battery may include a large number of battery cells. When the large number of battery cells are connected in series, if the battery cells have poor consistency, failure of an individual battery cell may lead to failure of the entire energy storage battery, which directly affects charging of the traction battery 210. To improve reliability of charging, these battery cells may be disposed in a plurality of energy storage batteries, that is, a plurality of energy storage batteries are used to simultaneously receive the electrical energy released by the traction battery 210. In this way, when a battery cell in one energy storage battery fails, in a specified manner, such as bypassing this energy storage battery, it is possible to keep the charging of the traction battery 210 not affected, thereby improving the reliability of charging.

A plurality of energy storage batteries may be connected in parallel. When the traction battery 210 simultaneously discharges to the plurality of energy storage batteries connected in parallel, due to different lengths of circuits between different energy storage batteries and the traction battery 210, for example, busbar circuits, electrical energy losses in a process of transmitting electrical energy to the energy storage batteries by the traction battery 210 differ, and therefore electrical energy released by the traction battery 210 to the plurality of energy storage batteries differs. For example, for an energy storage battery with a large circuit distance to the traction battery 210, a circuit loss causes a large voltage loss, and voltage at which the traction battery 210 discharges to the energy storage battery decreases, so that less electrical energy is released by the traction battery 210 to the energy storage battery within a specified period of time. On the contrary, for an energy storage battery with a small circuit distance to the traction battery 210, a circuit loss causes a small voltage loss, so that more electrical energy is released by the traction battery 210 to the energy storage battery within the same period of time. In this case, energy mismatch may occur between the energy storage batteries. The energy storage battery with a small circuit distance to the traction battery 210 will have more and more electrical energy during persistent charging, and the electrical energy of the energy storage battery with a large circuit distance to the traction battery 210 will have less and less electrical energy during persistent charging, leading to energy mismatch between the energy storage batteries connected in parallel.

Similarly, when the traction battery 210 is simultaneously charged by the plurality of energy storage batteries connected in parallel, factors such as circuit loss also cause the same problems. For example, for an energy storage battery with a large circuit distance to the traction battery 210, a circuit loss causes a large voltage loss, and voltage at which the traction battery is charged by the energy storage battery decreases correspondingly, so that less electrical energy is provided to the traction battery. On the contrary, for an energy storage battery with a small circuit distance to the traction battery 210, the circuit loss causes a small voltage loss, so that more electrical energy is provided by the energy storage battery to the traction battery. If such situation persists, energy mismatch may occur between the energy storage batteries.

Because the plurality of energy storage batteries follow the bucket effect, when one energy storage battery is fully charged, the traction battery 210 stops discharging to the energy storage battery to guarantee safety. It can be seen that energy mismatch between the energy storage batteries affects efficiency of electrical energy transmission between the traction battery 210 and the plurality of energy storage batteries, and the capacity of the energy storage batteries cannot be fully used, so that the charging efficiency of the traction battery 210 cannot be further improved.

Therefore, an embodiment of this application provides a battery charging scheme, where a first DC/DC converter is disposed to control charging current and discharging current of each energy storage battery, making electrical energy received and released by each energy storage battery match its current capacity and avoiding energy mismatch between the energy storage batteries, thereby improving the charging efficiency of the traction battery.

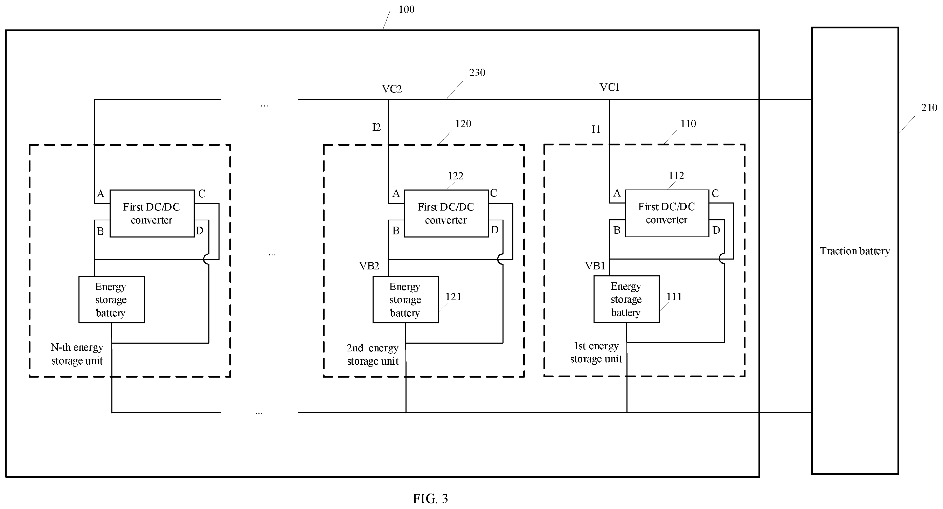

FIG. 3 is a schematic structural diagram of a charging apparatus 100 according to an embodiment of this application. The charging apparatus 100 may be a charging pile or a charger, or may be a mobile charging apparatus of another type, which is not limited herein.

The charging apparatus 100 may include N energy storage units connected in parallel, for example, an energy storage unit 110 and an energy storage unit 120, N being a positive integer greater than 1. Each charging period of the charging apparatus 100 includes a stage in which the traction battery 210 is charged and a stage in which the traction battery 210 discharges to the N energy storage units.

As shown in FIG. 3, each energy storage unit includes an energy storage battery and a first DC/DC converter connected to the energy storage battery. For example, the energy storage unit 110 includes an energy storage battery 111 and a first DC/DC converter 112 connected to the energy storage battery 111, and the energy storage unit 120 includes an energy storage battery 121 and a first DC/DC converter 122 connected to the energy storage battery 121.

Specifically, the energy storage battery in each energy storage unit is connected in series to a first DC side of the first DC/DC converter in the energy storage unit, that is, a side on which a port A and a port B are located. A port A of each first DCD/DC converter is connected to a busbar 230, and a port B thereof is connected to an electrode of a corresponding energy storage battery. When the first DC/DC converter operates, a current flowing through the first DC/DC converter to the energy storage battery is constant.

The energy storage battery in each energy storage unit is connected in parallel to a second DC side of the first DC/DC converter in the energy storage unit, that is, a side on which a port C and a port D are located. The port C and the port D of the first DC/DC converter are respectively connected to two electrodes of the energy storage battery. As shown in FIG. 3, the energy storage battery 111 in the energy storage unit 110 is connected in series to the first DC side of the first DC/DC converter 112, and the energy storage battery 111 is connected in parallel to the second DC side of the first DC/DC converter 112. The energy storage battery 121 in the energy storage unit 120 is connected in series to the first DC side of the first DC/DC converter 122, and the energy storage battery 121 is connected in parallel to the second DC side of the first DC/DC converter 122.

Optionally, the first DC/DC converter may be a converter that efficiently outputs a fixed current after converting an input current, for example, a DC/DC converter capable of operating in constant-current mode.

Optionally, the N energy storage units may be N energy storage electric cabinets. The energy storage batteries in the N energy storage units may be battery modules or battery packs, where the battery module or battery pack may be formed by a plurality of battery cells connected in series or parallel.

Further, the charging apparatus 100 may further include a control module 160. The control module 160 is connected to the N energy storage units and configured to control the first DC/DC converters in the N energy storage units so that the traction battery 210 discharges to the energy storage units via the first DC/DC converters or the energy storage units charge the traction battery 210 via the first DC/DC converters. The control module 160 may further be connected to the BMS 220 of the traction battery 210 through a communication line 400, so as to implement information exchange between the charging apparatus 100 and the BMS 220.

For example, the control module 160 may be a controller of an energy management system (EMS) in a charging pile or a charger. Further, the control module 160 may further include an auxiliary power supply system.

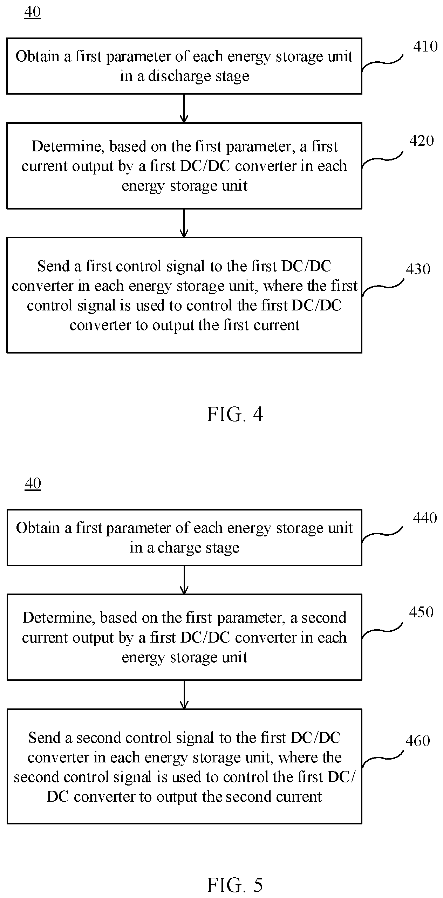

FIG. 4 shows a charging method 40 according to an embodiment of this application, which is used for charging the traction battery 210. The method 40 may be performed by the control module 160 and specifically includes some or all of the following steps.

Step 410: Obtain a first parameter of each energy storage unit in a discharge stage.

The first parameter is related to current electrical energy of an energy storage battery in each energy storage unit. For example, the first parameter may include at least one of the following parameters: current SOC of the energy storage battery in each energy storage unit; current voltage of the energy storage battery in each energy storage unit; and current voltage of each energy storage unit.

A larger SOC of the energy storage battery in each energy storage unit, a higher current voltage VB of the energy storage battery in the energy storage unit, or a higher current voltage of the energy storage unit, that is, a higher voltage on a busbar 230 means more current electrical energy of the energy storage battery in the energy storage unit. On the contrary, a smaller SOC of the energy storage battery in each energy storage unit, a lower current voltage VB of the energy storage battery in the energy storage unit, or a lower current voltage VC of the energy storage unit, that is, a lower voltage on the busbar 230 means less current electrical energy of the energy storage battery in the energy storage unit.

It can be seen that at least one of the current SOC of the energy storage battery in each energy storage unit, the current voltage VB of the energy storage battery in each energy storage unit, and the current voltage VC of each energy storage unit being selected as the first parameter can more directly reflect a current capacity state of the energy storage battery.

Step 420: Determine, based on the first parameter, a first current output by a first DC/DC converter in each energy storage unit. The first current output by the first DC/DC converter in each energy storage unit is inversely proportional to the first parameter of the energy storage unit.

With the energy storage unit 110 and the energy storage unit 120 in FIG. 3 as an example, an SOC of the energy storage battery 111 in the energy storage unit 110 is SOC 1, an SOC of the energy storage battery 121 in the energy storage unit 120 is SOC 2, a voltage of the energy storage battery 111 in the energy storage unit 110 is VB 1, a voltage of the energy storage battery 121 in the energy storage unit 120 is VB 2, a voltage of the energy storage unit 110 is VC 1, and a voltage of the energy storage unit 120 is VC 2. If the first parameter is the SOC of the energy storage battery, a first current I1 output by the first DC/DC converter 121 and a first current I2 output by the first DC/DC converter 122 may be set to satisfy: I1/I2=SOC 2/SOC 1. If the first parameter is the voltage of the energy storage battery, I1 and I2 may be set to satisfy: I1/I2=VB 2/VB 1. If the first parameter is the voltage of the energy storage unit, I1 and I2 may be set to satisfy: I1/I2=VC 2/VC 1.

Step 430: Send a first control signal to the first DC/DC converter in each energy storage unit. The first control signal is used to control the first DC/DC converter to output the first current, so as to cause the first DC/DC converter in each energy storage unit to receive, at the first current, electrical energy released by the traction battery 210.

In this embodiment, fast charging of the traction battery is implemented by alternate charging and discharging. Because the charging apparatus includes a plurality of energy storage units connected in parallel, and each energy storage unit includes an energy storage battery and a first DC/DC converter connected to the energy storage battery, electrical energy discharged by the traction battery to each energy storage unit can be adjusted by controlling the output current of each first DC/DC converter. For example, the output current of the first DC/DC converter in each energy storage unit is adjusted based on the first parameter of the energy storage unit so that the output current is inversely proportional to the first parameter. This makes electrical energy received by each energy storage unit match its current electrical energy, avoiding energy mismatch between the energy storage units. In this way, capacity of the energy storage units is fully used, enabling the energy storage units to more efficiently receive electrical energy released by the traction battery, thereby improving the charging efficiency of the traction battery.

Specifically, when the traction battery 210 discharges to the N energy storage units, the control module 160 can receive a discharging current sent by the BMS 220, where the discharging current is a current required for discharging of the traction battery 210. The control module 160 can obtain the first parameters of all energy storage units at the same time, so as to adjust, based on the discharging current of the traction battery 210 and the first parameter of each energy storage unit, the first current output by the first DC/DC converter in each energy storage unit so that the first current is inversely proportional to the first parameter of each energy storage unit.

For example, as shown in FIG. 3, with the energy storage unit 110 and the energy storage unit 120 as an example, a distance of a busbar 230 between the energy storage battery 121 in the energy storage unit 120 and the traction battery 210 is large, a circuit loss causes a large voltage loss, and voltage at which the traction battery 210 discharges to the energy storage battery 121 decreases, so that less electrical energy is released by the traction battery 210 to the energy storage battery 121 within a specified period of time. A distance of a busbar 230 between the energy storage battery 111 in the energy storage unit 110 and the traction battery 210 is small, and a circuit loss causes a small voltage loss, so that more electrical energy is released by the traction battery 210 to the energy storage battery 111 within the same period of time. As a result, the traction battery 210 releases more electrical energy to the energy storage battery 111, but releases less electrical energy to the energy storage battery 121. As such, energy mismatch gradually occurs between the two energy storage batteries.

In this case, when the energy storage battery 121 currently has less electrical energy, the control module 160 controls the first DC/DC converter 122 connected to the energy storage battery 121 to output a higher first current I2 to the energy storage battery 121; and correspondingly, when the energy storage battery 111 currently has more electrical energy, the control module 160 controls the first DC/DC converter 112 connected to the energy storage battery 111 to output a lower first current I1 to the energy storage battery 111. Through this method, electrical energy received by the energy storage unit 110 and the energy storage unit 120 match their current electrical energy, so that the energy storage battery 121 with less current electrical energy can receive more electrical energy from the traction battery 210 and the energy storage battery 111 with more current electrical energy can receive less electrical energy from the traction battery 210, thereby making energy of the energy storage units relatively balanced after the traction battery 210 discharges. In this way, capacity of the energy storage units is fully used, thereby improving the charging efficiency.

The above describes how the control module 160 controls the first DC/DC converter during a stage in which the traction battery 210 discharges to the N energy storage units. Correspondingly, the control module 160 may also control the first DC/DC converter during a stage in which the traction battery 210 is charged by the N energy storage units, so as to make the energy of the N energy storage units more balanced.

When the traction battery 210 is charged by the N energy storage units, optionally, as shown in FIG. 5, the method 40 further includes the following steps.

Step 440: Obtain a first parameter of each energy storage unit in a charge stage.

The first parameter is related to current electrical energy of an energy storage battery in each energy storage unit. For example, the first parameter may include at least one of the following parameters: current SOC of the energy storage battery in each energy storage unit; current voltage of the energy storage battery in each energy storage unit; and current voltage of each energy storage unit.

Step 450: Determine, based on the first parameter, a second current output by a first DC/DC converter in each energy storage unit, where the second current output by the first DC/DC converter in each energy storage unit is proportional to the first parameter of the energy storage unit.

With the energy storage unit 110 and the energy storage unit 120 in FIG. 3 as an example, an SOC of the energy storage battery 111 in the energy storage unit 110 is SOC 1, an SOC of the energy storage battery 121 in the energy storage unit 120 is SOC 2, a voltage of the energy storage battery 111 in the energy storage unit 110 is VB 1, a voltage of the energy storage battery 121 in the energy storage unit 120 is VB 2, a voltage of the energy storage unit 110 is VC 1, and a voltage of the energy storage unit 120 is VC 2. If the first parameter is the SOC of the energy storage battery, a first current I1 output by the first DC/DC converter 121 and a first current I2 output by the first DC/DC converter 122 may be set to satisfy: I1/I2=SOC 1/SOC 2. If the first parameter is the voltage of the energy storage battery, I1 and I2 may be set to satisfy: I1/I2=VB 1/VB 2. If the first parameter is the voltage of the energy storage unit, I1 and I2 may be set to satisfy: I1/I2=VC 1/VC 2.

Step 460: Send a second control signal to the first DC/DC converter in each energy storage unit, where the second control signal is used to control the first DC/DC converter to output the second current, so as to cause the first DC/DC converter in each energy storage unit to charge the traction battery 210 at the second current.

In this way, similarly, in the stage in which the traction battery 210 is charged, the output current of the first DC/DC converter in each energy storage unit can be adjusted to be proportional to current electrical energy of the energy storage battery, making the electrical energy provided by each energy storage unit better match its current electrical energy. In this way, capacity of the energy storage batteries is fully used, thereby improving the charging efficiency of the traction battery.

In this embodiment, fast charging of the traction battery is implemented by alternate charging and discharging. Because the charging apparatus includes a plurality of energy storage units connected in parallel, and each energy storage unit includes an energy storage battery and a first DC/DC converter connected to the energy storage battery, electrical energy provided by each energy storage unit to the traction battery can be adjusted by controlling the output current of each first DC/DC converter. For example, the output current of the first DC/DC converter in each energy storage unit is adjusted based on the first parameter of the energy storage unit so that the output current is proportional to the first parameter. This makes electrical energy released by each energy storage unit better match its current electrical energy, avoiding energy mismatch between the energy storage units. In this way, capacity of the energy storage units is fully used, enabling the energy storage units to more efficiently release electrical energy to charge the traction battery, thereby improving the charging efficiency of the traction battery.

Specifically, when the traction battery 210 is charged by the N energy storage units, the control module 160 can receive a charging current sent by the BMS 220, where the charging current is a current required for charging of the traction battery 210. The control module 160 can obtain the first parameters of all energy storage units at the same time, so as to adjust, based on the charging current of the traction battery 210 and the first parameter of each energy storage unit, the second current output by the first DC/DC converter in each energy storage unit so that the second current is proportional to the first parameter of each energy storage unit.

For example, as shown in FIG. 3, the energy storage unit 110 and the energy storage unit 120 are used as an example. Due to a large length of a busbar 230 between the energy storage battery 121 in the energy storage unit 120 and the traction battery 210, the circuit loss causes a large voltage loss, voltage at which the traction battery 210 is charged by the energy storage battery 121 decreases, and therefore less electrical energy is provided by the energy storage battery 121 to the traction battery 210 within a specified period of time. Due to small length of a busbar 230 between the energy storage battery 111 in the energy storage unit 110 and the traction battery 210, the circuit loss causes a small voltage loss, and therefore more electrical energy is provided by the energy storage battery 121 to the traction battery 210 within the same period of time. As a result, the energy storage battery 111 provides more electrical energy to the traction battery 210 while the energy storage battery 121 provides less electrical energy to the traction battery 210. As such, energy mismatch gradually occurs between the two energy storage batteries.

In this case, when the energy storage battery 121 currently has less electrical energy, the control module 160 controls the first DC/DC converter 122 connected to the energy storage battery 121 to output a lower second current I2 to the energy storage battery 121; and correspondingly, when the energy storage battery 111 currently has more electrical energy, the control module 160 controls the first DC/DC converter 112 connected to the energy storage battery 111 to output a higher second current I1 to the energy storage battery 111. Through this method, electrical energy provided by the energy storage unit 110 and the energy storage unit 120 to the traction battery 210 match their current electrical energy, the energy storage battery 121 with less current electrical energy can release less electrical energy to the traction battery 210, and the energy storage battery 111 with more current electrical energy can release more electrical energy to the traction battery 210, thereby making energy of the energy storage units relatively balanced after the traction battery 210 is charged. In this way, capacity of the energy storage units is fully used, thereby improving the charging efficiency.

Optionally, the output currents of the first DC/DC in the N energy storage units are controlled using the foregoing method 40, only when values of the first parameters of any two energy storage units have a great difference, for example, when a difference between SOCs or voltages of two energy storage units is greater than a preset threshold.

With the energy storage unit 110 and the energy storage unit 120 in FIG. 3 as an example, the output currents of the first DC/DC converters in the N energy storage units are controlled and adjusted only when a difference between the SOC of the energy storage battery 111 and the SOC of the energy storage battery 121 is greater than a preset SOC threshold, for example, 2%, or when a difference between voltage of the energy storage battery 111 and voltage of the energy storage battery 121 is greater than a preset voltage threshold, for example, 10 V.

Optionally, the control module 160 can also calculate a duration T based on the difference between the first parameters of the two energy storage units. After time of the first DC/DC converters in the energy storage units operating at corresponding first currents reaches T, the first parameters of the energy storage units are recalculated, so as to determine whether the first DC/DC converters in the energy storage units still need to continue to operate at the corresponding first currents. Because the voltage and capacity of the energy storage batteries gradually increase while the traction battery 210 is discharging to the energy storage batteries, if the duration T is not set, it is possible that mismatch occurs again due to excessive adjustment after the electrical energy of the energy storage batteries is balanced.

The N energy storage units are connected in parallel. Therefore, optionally, when an energy storage battery in one energy storage unit is fully charged, that is, voltage of the energy storage battery reaches a charging voltage threshold of a battery cell of the energy storage battery, the control module 160 can control the first current output by the first DC/DC converter connected to the energy storage battery to be 0, equivalent to bypassing the energy storage battery fully charged, so that the traction battery 210 no longer discharges to the energy storage battery to effectively avoid overcharge of the energy storage battery. However, the first currents of the first DC/DC converters in the remaining energy storage units are kept unchanged.

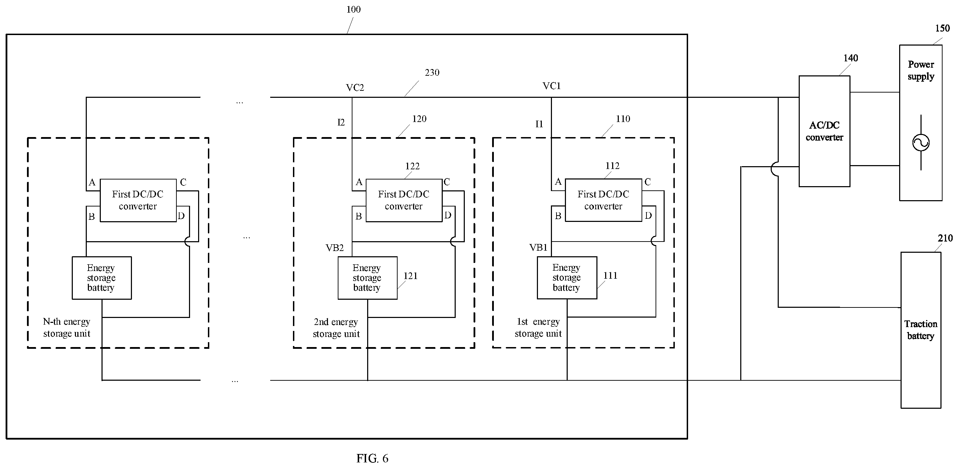

It should be understood that in the embodiments of this application, the traction battery 210 may be charged by an alternating current power supply 150 only, that is, a power grid, or the traction battery 210 may be charged by N energy storage units and the alternating current power supply 150 together, thereby further improving the charging efficiency. As shown in FIG. 6, the charging apparatus 100 further includes an AC/DC converter 140, where the AC/DC converter 140 is connected between the traction battery 210 and the alternating current power supply 150. When the traction battery 210 is charged, alternating current output by the alternating current power supply 150 is converted into stable direct current via the AC/DC converter 140, so as to charge the traction battery 210.

Specifically, when the traction battery 210 is charged by the alternating current power supply 150, the control module 160 can control the AC/DC converter 140, so as to cause the alternating current power supply 150 to charge the traction battery 210 via the AC/DC converter 140.

Optionally, if the alternating current power supply 150 can be used for receiving electrical energy, that is, grid-connected discharging is allowed, the traction battery 210 can discharge to the N energy storage units and the alternating current power supply 150 at the same time. When the traction battery 210 discharges to the alternating current power supply 150, the control module controls the AC/DC converter 140 so that the traction battery 210 discharges to the alternating current power supply 150 via the AC/DC converter 140.

It can be learned that when the AC/DC converter 140 is further connected between the traction battery 210 and the alternating current power supply 150, the AC/DC converter 140 can not only convert alternating current output by the alternating current power supply 150 into stable direct current for the alternating current power supply 150 to charge the traction battery 210, but also convert direct current output by the traction battery 210 into alternating current in the discharge stage of the traction battery 210 so as to release electrical energy of the traction battery 210 to the alternating current power supply 150, implementing discharging of the traction battery 210 to the N energy storage units and the alternating current power supply 150 simultaneously. This reduces time of the discharge stage of the traction battery 210, and further improves the charging efficiency.

If the alternating current power supply 150 cannot be used for receiving electrical energy, that is, grid-connected discharging is not allowed, the traction battery 210 discharges only to the N energy storage units.

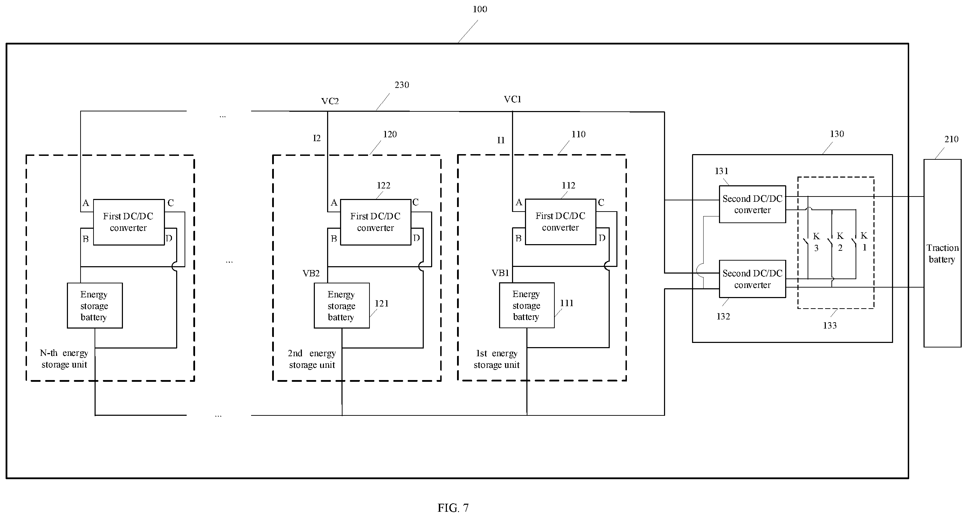

Optionally, as shown in FIG. 7, the charging apparatus 100 may further include a separating unit 130.

Specifically, the separating unit 130 is connected between the N energy storage units and the traction battery 210, and the separating unit 130 includes M second DC/DC converters and a switch module 133 connected between the M second DC/DC converters, M being a positive integer greater than or equal to 2.

The control module 160 can control the switch module 133 to make the M second DC/DC converters connected in series. In this case, voltage output by the separating unit 130 to the traction battery 210 is M times voltage output by the N energy storage units.

The control module 160 can also control the switch module 133 to make the M second DC/DC converters connected in parallel. In this case, current output by the separating unit 130 to the traction battery 210 is M times current output by the N energy storage units.

With M=2 as an example, as shown in FIG. 6, the separating unit 130 includes two second DC/DC converters: a second DC/DC converter 131 and a second DC/DC converter 132. When the traction battery 210 is charged by the N energy storage units, sides of the second DC/DC converter 131 and the second DC/DC converter 132 connected to the N energy storage units are used as input terminals, and sides of the second DC/DC converter 131 and the second DC/DC converter 132 connected to the traction battery 210 are used as output terminals. The input terminal of the second DC/DC converter 131 and the input terminal of the second DC/DC converter 132 are connected in parallel, and the switch module 133 is connected between the output terminal of the second DC/DC converter 131 and the output terminal of the second DC/DC converter 132.

In an example, as shown in FIG. 6, the switch module 133 may include a switch K1, a switch K2, and a switch K3. When the traction battery 210 is charged by the energy storage units 130, the control module 160 may control the switch K1 in the switch module 133 to close, so as to make the output terminals of the second DC/DC converter 131 and the second DC/DC converter 132 connected in series. In this way, the voltage output by the separating unit 130 to the traction battery 210 is twice the voltage output by the N energy storage units.

When the traction battery 210 is charged by the energy storage units 130, the control module 160 can control the parallel switch K2 and the parallel switch K3 in the switch module 133, so as to make the output terminals of the second DC/DC converter 131 and the second DC/DC converter 132 connected in parallel. In this way, the current output by the separating unit 130 to the traction battery 210 is twice total current output by the N energy storage units.

It can be seen that because the separating unit 130 is connected between the N energy storage units and the traction battery 210, and the separating unit 130 includes M second DC/DC converters and a switch module 133 connected between the M second DC/DC converters, a series-parallel relationship of the output terminals of the M second DC/DC converters can be changed by controlling the switch module 133, thereby implementing adjustment of the voltage output by the separating unit 130 to the traction battery 210. When the switch module 133 of the separating unit 130 is controlled to make the M second DC/DC converters connected in series, the traction battery 210 can be charged at a high voltage; and when the switch module 133 of the separating unit 130 is controlled to make the M second DC/DC converters connected in parallel, currents output by the second DC/DC converters are added up, so that the traction battery 210 can be charged at a high current.

An embodiment of this application further provides an EMS, including a processor, where the processor is configured to perform the charging method according to the foregoing embodiments of this application.

An embodiment of this application further provides a charging system, including a traction battery and the charging apparatus 100 according to any one of the foregoing embodiments. The charging apparatus 100 is configured to charge the traction battery 210, where each charging period includes a stage in which the traction battery 210 is charged and a stage in which the traction battery 210 discharges.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. A charging method (40) for a traction battery, applied to a charging apparatus,
wherein the charging apparatus comprises N energy storage units connected in parallel, wherein each energy storage unit comprises an energy storage battery and a first DC/DC converter connected to the energy storage battery, and each charging period of the charging apparatus comprises a stage in which the traction battery is charged and a stage in which the traction battery discharges to the N energy storage units, N being a positive integer greater than 1; and
the charging method (40) comprises:
charging, during the stage in which the traction battery is charged, the traction battery; and
discharging the traction battery to the N energy storage units during the discharge stage, wherein discharging the traction battery to the N energy storage units comprises:
obtaining (410) a first parameter of each energy storage unit in the discharge stage;
determining (420), based on the first parameter, a first current output by the first DC/DC converter in each energy storage unit to the energy storage battery, wherein the first current output by the first DC/DC converter in each energy storage unit is inversely proportional to the first parameter of the energy storage unit; and
sending (430) a first control signal to the first DC/DC converter in each energy storage unit, wherein the first control signal is used to control the first DC/DC converter to output the first current to the energy storage battery, so as to cause the first DC/DC converter in each energy storage unit to receive, at the first current, electrical energy released by the traction battery.

2. The charging method (40) according to claim 1, wherein charging, during the stage in which the traction battery is charged, the traction battery comprises:
obtaining (440) the first parameter of each energy storage unit in the charge stage;
determining (450), based on the first parameter, a second current output by the first DC/DC converter in each energy storage unit, wherein the second current output by the first DC/DC converter in each energy storage unit to the traction battery is proportional to the first parameter of the energy storage unit; and
sending (460) a second control signal to the first DC/DC converter in each energy storage unit, wherein the second control signal is used to control the first DC/DC converter to output the second current to the traction battery, so as to cause the first DC/DC converter in each energy storage unit to charge the traction battery at the second current.

3. The charging method (40) according to claim 1 or 2, wherein the first parameter of each energy storage unit comprises at least one of the following parameters:
current state of charge SOC of the energy storage battery in each energy storage unit;
current voltage of the energy storage battery in each energy storage unit; and
current voltage of each energy storage unit.

4. The charging method (40) according to any one of claims 1 to 3, wherein the charging apparatus further comprises a separating unit, wherein the separating unit is connected between the N energy storage units and the traction battery, and the separating unit comprises M second DC/DC converters and a switch module connected between the M second DC/DC converters, M being a positive integer greater than or equal to 2; and
the charging method (40) further comprises:
controlling the switch module to make the M second DC/DC converters connected in series, so that voltage output by the separating unit to the traction battery is M times voltage output by the N energy storage units; or
controlling the switch module to make the M second DC/DC converters connected in parallel so that current output by the separating unit to the traction battery is M times current output by the N energy storage units.

5. The charging method (40) according to any one of claims 1 to 4, wherein the charging apparatus further comprises an AC/DC converter, wherein the AC/DC converter is connected between the traction battery and an alternating current power supply, so as to cause the alternating current power supply to charge the traction battery via the AC/DC converter.

6. A charging apparatus (100) for a traction battery, wherein the charging apparatus (100) comprises: N energy storage units connected in parallel, wherein each energy storage unit comprises an energy storage battery and a first DC/DC converter connected to the energy storage battery, and each charging period of the charging apparatus (100) comprises a stage in which the traction battery (210) is charged and a stage in which the traction battery (210) discharges to the N energy storage units, N being a positive integer greater than 1; and
a control module (160), configured to:
control the charging apparatus (100) to charge, during the stage in which the traction battery is charged, the traction battery (210); and
control the charging apparatus (100) to discharge the traction battery (210) to the N energy storage units during the discharge stage, wherein discharging the traction battery (210) to the N energy storage units comprises:
obtaining a first parameter of each energy storage unit in the discharge stage;
determining, based on the first parameter, a first current output by the first DC/DC converter in each energy storage unit to the energy storage battery, wherein the first current output by the first DC/DC converter in each energy storage unit is inversely proportional to the first parameter of the energy storage unit; and
sending a first control signal to the first DC/DC converter in each energy storage unit, wherein the first control signal is used to control the first DC/DC converter to output the first current to the energy storage battery, so as to cause the first DC/DC converter in each energy storage unit to receive, at the first current, electrical energy released by the traction battery (210).

7. The charging apparatus (100) according to claim 6, wherein charging, during the stage in which the traction battery is charged, the traction battery further comprises:
obtaining the first parameter of each energy storage unit in the charge stage;
determining, based on the first parameter, a second current output by the first DC/DC converter in each energy storage unit to the traction battery, wherein the second current output by the first DC/DC converter in each energy storage unit is proportional to the first parameter of the energy storage unit; and
sending a second control signal to the first DC/DC converter in each energy storage unit, wherein the second control signal is used to control the first DC/DC converter to output the second current to the traction battery, so as to cause the first DC/DC converter in each energy storage unit to charge the traction battery (210) at the second current.

8. The charging apparatus (100) according to claim 6 or 7, wherein the first parameter of each energy storage unit comprises at least one of the following parameters:
current state of charge SOC of the energy storage battery in each energy storage unit;
current voltage of the energy storage battery in each energy storage unit; and
current voltage of each energy storage unit.

9. The charging apparatus (100) according to any one of claims 6 to 8, wherein the charging apparatus (100) further comprises a separating unit (130), wherein the separating unit (130) is connected between the N energy storage units and the traction battery (210), and the separating unit (130) comprises M second DC/DC converters and a switch module (133) connected between the M second DC/DC converters, M being a positive integer greater than or equal to 2; and
the control module (160) is further configured to:
control the switch module (133) to make the M second DC/DC converters connected in series, so that voltage output by the separating unit (130) to the traction battery (210) is M times voltage output by the N energy storage units; or
control the switch module (133) to make the M second DC/DC converters connected in parallel so that current output by the separating unit (130) to the traction battery (210) is M times current output by the N energy storage units.

10. The charging apparatus (100) according to any one of claims 6 to 9, wherein the charging apparatus (100) further comprises an AC/DC converter (140), wherein the AC/DC converter (140) is connected between the traction battery (210) and an alternating current power supply (150), so as to cause the alternating current power supply (150) to charge the traction battery (210) via the AC/DC converter (140).

11. A charging system (10), comprising:
a traction battery (210); and
the charging apparatus (100) according to any one of claims 6 to 10, wherein the charging apparatus (100) is configured to charge the traction battery (210), and each charging period comprises a stage in which the traction battery (210) is charged and a stage in which the traction battery (210) discharges.

## Patentansprüche

1. Ladeverfahren (40) für eine Traktionsbatterie, das auf eine Ladevorrichtung angewendet wird, wobei die Ladevorrichtung N parallel geschaltete Energiespeichereinheiten umfasst, wobei jede Energiespeichereinheit eine Energiespeicherbatterie und einen mit der Energiespeicherbatterie verbundenen ersten DC/DC-Wandler umfasst und jede Ladezeit der Ladevorrichtung eine Phase, in der die Traktionsbatterie geladen wird, und eine Phase, in der sich die Traktionsbatterie in die N Energiespeichereinheiten entlädt, umfasst, wobei N eine positive ganze Zahl größer als 1 ist; und
das Ladeverfahren (40) Folgendes umfasst:
Laden der Traktionsbatterie während der Phase, in der die Traktionsbatterie geladen wird; und
Entladen der Traktionsbatterie in die N Energiespeichereinheiten während der Entladephase, wobei das Entladen der Traktionsbatterie in die N Energiespeichereinheiten Folgendes umfasst:
Erhalten (410) eines ersten Parameters jeder Energiespeichereinheit in der Entladephase;
Bestimmen (420), basierend auf dem ersten Parameter, eines von dem ersten DC/DC-Wandler in jeder Energiespeichereinheit an die Energiespeicherbatterie ausgegebenen ersten Stroms, wobei der von dem ersten DC/DC-Wandler in jeder Energiespeichereinheit ausgegebene erste Strom umgekehrt proportional zu dem ersten Parameter der Energiespeichereinheit ist; und
Senden (430) eines ersten Steuersignals an den ersten DC/DC-Wandler in jeder Energiespeichereinheit, wobei das erste Steuersignal genutzt wird, um den ersten DC/DC-Wandler zu steuern, um den ersten Strom an die Energiespeicherbatterie auszugeben, um zu bewirken, dass der erste DC/DC-Wandler in jeder Energiespeichereinheit von der Traktionsbatterie abgegebene elektrische Energie bei dem ersten Strom aufnimmt.

2. Ladeverfahren (40) nach Anspruch 1, wobei das Laden der Traktionsbatterie während der Phase, in der die Traktionsbatterie geladen wird, Folgendes umfasst:
Erhalten (440) des ersten Parameters jeder Energiespeichereinheit in der Ladephase;
Bestimmen (450), basierend auf dem ersten Parameter, eines von dem ersten DC/DC-Wandler in jeder Energiespeichereinheit ausgegebenen zweiten Stroms, wobei der von dem ersten DC/DC-Wandler in jeder Energiespeichereinheit an die Traktionsbatterie ausgegebene zweite Strom proportional zu dem ersten Parameter der Energiespeichereinheit ist; und
Senden (460) eines zweiten Steuersignals an den ersten DC/DC-Wandler in jeder Energiespeichereinheit, wobei das zweite Steuersignal genutzt wird, um den ersten DC/DC-Wandler zu steuern, um den zweiten Strom an die Traktionsbatterie auszugeben, um zu bewirken, dass der erste DC/DC-Wandler in jeder Energiespeichereinheit die Traktionsbatterie bei dem zweiten Strom lädt.

3. Ladeverfahren (40) nach Anspruch 1 oder 2, wobei der erste Parameter jeder Energiespeichereinheit mindestens einen der folgenden Parameter umfasst:
einen aktuellen Ladezustand SOC der Energiespeicherbatterie in jeder Energiespeichereinheit;
eine aktuelle Spannung der Energiespeicherbatterie in jeder Energiespeichereinheit; und
eine aktuelle Spannung jeder Energiespeichereinheit.

4. Ladeverfahren (40) nach einem der Ansprüche 1 bis 3, wobei die Ladevorrichtung ferner eine Trenneinheit umfasst, wobei die Trenneinheit zwischen die N Energiespeichereinheiten und die Traktionsbatterie geschaltet ist und die Trenneinheit M zweite DC/DC-Wandler und ein zwischen die M zweiten DC/DC-Wandler geschaltetes Schaltermodul umfasst, wobei M eine positive ganze Zahl größer als oder gleich 2 ist; und
das Ladeverfahren (40) ferner Folgendes umfasst:
Steuern des Schaltermoduls, um die M zweiten DC/DC-Wandler in Reihe zu schalten, sodass eine von der Trenneinheit an die Traktionsbatterie ausgegebene Spannung ein M-faches einer von den N Energiespeichereinheiten ausgegebenen Spannung beträgt; oder
Steuern des Schaltermoduls, um die M zweiten DC/DC-Wandler parallel zu schalten, sodass ein von der Trenneinheit an die Traktionsbatterie ausgegebener Strom ein M-faches eines von den N Energiespeichereinheiten ausgegebenen Stroms beträgt.

5. Ladeverfahren (40) nach einem der Ansprüche 1 bis 4, wobei die Ladevorrichtung ferner einen AC/DC-Wandler umfasst, wobei der AC/DC-Wandler zwischen die Traktionsbatterie und eine Wechselstromversorgung geschaltet ist, um zu bewirken, dass die Wechselstromversorgung die Traktionsbatterie über den AC/DC-Wandler lädt.

6. Ladevorrichtung (100) für eine Traktionsbatterie, wobei die Ladevorrichtung (100) Folgendes umfasst: N parallel geschaltete Energiespeichereinheiten, wobei jede Energiespeichereinheit eine Energiespeicherbatterie und einen mit der Energiespeicherbatterie verbundenen ersten DC/DC-Wandler umfasst und jede Ladezeit der Ladevorrichtung (100) eine Phase, in der die Traktionsbatterie (210) geladen wird, und eine Phase, in der sich die Traktionsbatterie (210) in die N Energiespeichereinheiten entlädt, umfasst, wobei N eine positive ganze Zahl größer als 1 ist; und
ein Steuermodul (160), das für Folgendes konfiguriert ist:
Steuern der Ladevorrichtung (100), um die Traktionsbatterie (210) während der Phase, in der die Traktionsbatterie geladen wird, zu laden; und
Steuern der Ladevorrichtung (100), um die Traktionsbatterie (210) während der Entladephase in die N Energiespeichereinheiten zu entladen, wobei das Entladen der Traktionsbatterie (210) in die N Energiespeichereinheiten Folgendes umfasst:
Erhalten eines ersten Parameters jeder Energiespeichereinheit in der Entladephase;
Bestimmen, basierend auf dem ersten Parameter, eines von dem ersten DC/DC-Wandler in jeder Energiespeichereinheit an die Energiespeicherbatterie ausgegebenen ersten Stroms, wobei der von dem ersten DC/DC-Wandler in jeder Energiespeichereinheit ausgegebene erste Strom umgekehrt proportional zu dem ersten Parameter der Energiespeichereinheit ist; und
Senden eines ersten Steuersignals an den ersten DC/DC-Wandler in jeder Energiespeichereinheit, wobei das erste Steuersignal genutzt wird, um den ersten DC/DC-Wandler zu steuern, um den ersten Strom an die Energiespeicherbatterie auszugeben, um zu bewirken, dass der erste DC/DC-Wandler in jeder Energiespeichereinheit von der Traktionsbatterie (210) abgegebene elektrische Energie bei dem ersten Strom aufnimmt.

7. Ladevorrichtung (100) nach Anspruch 6, wobei das Laden der Traktionsbatterie während der Phase, in der die Traktionsbatterie geladen wird, ferner Folgendes umfasst:
Erhalten des ersten Parameters jeder Energiespeichereinheit in der Ladephase;
Bestimmen, basierend auf dem ersten Parameter, eines von dem ersten DC/DC-Wandler in jeder Energiespeichereinheit an die Traktionsbatterie ausgegebenen zweiten Stroms, wobei der von dem ersten DC/DC-Wandler in jeder Energiespeichereinheit ausgegebene zweite Strom proportional zu dem ersten Parameter der Energiespeichereinheit ist; und
Senden eines zweiten Steuersignals an den ersten DC/DC-Wandler in jeder Energiespeichereinheit, wobei das zweite Steuersignal genutzt wird, um den ersten DC/DC-Wandler zu steuern, um den zweiten Strom an die Traktionsbatterie auszugeben, um zu bewirken, dass der erste DC/DC-Wandler in jeder Energiespeichereinheit die Traktionsbatterie (210) bei dem zweiten Strom lädt.

8. Ladevorrichtung (100) nach Anspruch 6 oder 7, wobei der erste Parameter jeder Energiespeichereinheit mindestens einen der folgenden Parameter umfasst:
einen aktuellen Ladezustand SOC der Energiespeicherbatterie in jeder Energiespeichereinheit;
eine aktuelle Spannung der Energiespeicherbatterie in jeder Energiespeichereinheit; und
eine aktuelle Spannung jeder Energiespeichereinheit.

9. Ladevorrichtung (100) nach einem der Ansprüche 6 bis 8, wobei die Ladevorrichtung (100) ferner eine Trenneinheit (130) umfasst, wobei die Trenneinheit (130) zwischen die N Energiespeichereinheiten und die Traktionsbatterie (210) geschaltet ist und die Trenneinheit (130) M zweite DC/DC-Wandler und ein zwischen die M zweiten DC/DC-Wandler geschaltetes Schaltermodul (133) umfasst, wobei M eine positive ganze Zahl größer als oder gleich 2 ist; und
das Steuermodul (160) ferner für Folgendes konfiguriert ist:
Steuern des Schaltermoduls (133), um die M zweiten DC/DC-Wandler in Reihe zu schalten, sodass eine von der Trenneinheit (130) an die Traktionsbatterie (210) ausgegebene Spannung ein M-faches einer von den N Energiespeichereinheiten ausgegebenen Spannung beträgt; oder
Steuern des Schaltermoduls (133), um die M zweiten DC/DC-Wandler parallel zu schalten, sodass ein von der Trenneinheit (130) an die Traktionsbatterie (210) ausgegebener Strom ein M-faches eines von den N Energiespeichereinheiten ausgegebenen Stroms beträgt.

10. Ladevorrichtung (100) nach einem der Ansprüche 6 bis 9, wobei die Ladevorrichtung (100) ferner einen AC/DC-Wandler (140) umfasst, wobei der AC/DC-Wandler (140) zwischen die Traktionsbatterie (210) und eine Wechselstromversorgung (150) geschaltet ist, um zu bewirken, dass die Wechselstromversorgung (150) die Traktionsbatterie (210) über den AC/DC-Wandler (140) lädt.

11. Ladesystem (10), das Folgendes umfasst:
eine Traktionsbatterie (210); und
die Ladevorrichtung (100) nach einem der Ansprüche 6 bis 10, wobei die Ladevorrichtung (100) konfiguriert ist, um die Traktionsbatterie (210) zu laden, und jede Ladezeit eine Phase, in der die Traktionsbatterie (210) geladen wird, und eine Phase, in der sich die Traktionsbatterie (210) entlädt, umfasst.

## Revendications

1. Procédé de recharge (40) destiné à une batterie de traction, appliqué à un appareil de recharge, dans lequel l'appareil de recharge comprend N unités de stockage d'énergie connectées en parallèle, chaque unité de stockage d'énergie comprenant une batterie de stockage d'énergie et un premier convertisseur CC/CC connecté à la batterie de stockage d'énergie, et chaque période de recharge de l'appareil de recharge comprend une phase dans laquelle la batterie de traction est rechargée et une phase dans laquelle la batterie de traction se décharge vers les N unités de stockage d'énergie, N étant un entier positif supérieur à 1 ; et
le procédé de recharge (40) comprend les étapes consistant à :
recharger, pendant la phase dans laquelle la batterie de traction est rechargée, la batterie de traction ; et
décharger la batterie de traction vers les N unités de stockage d'énergie pendant la phase de décharge, la décharge de la batterie de traction vers les N unités de stockage d'énergie comprenant les étapes consistant à :
obtenir (410) un premier paramètre de chaque unité de stockage d'énergie dans la phase de décharge ;
déterminer (420), sur la base du premier paramètre, un premier courant émis par le premier convertisseur CC/CC de chaque unité de stockage d'énergie vers la batterie de stockage d'énergie, le premier courant émis par le premier convertisseur CC/CC de chaque unité de stockage d'énergie étant inversement proportionnel au premier paramètre de l'unité de stockage d'énergie ; et
envoyer (430) un premier signal de commande au premier convertisseur CC/CC de chaque unité de stockage d'énergie, le premier signal de commande étant utilisé pour commander le premier convertisseur CC/CC afin d'émettre le premier courant vers la batterie de stockage d'énergie, de sorte à amener le premier convertisseur CC/CC de chaque unité de stockage d'énergie à recevoir, avec le premier courant, l'énergie électrique libérée par la batterie de traction.

2. Procédé de recharge (40) selon la revendication 1, dans lequel la recharge, durant la phase dans laquelle la batterie de traction est rechargée, de la batterie de traction comprend les étapes consistant à :
obtenir (440) le premier paramètre de chaque unité de stockage d'énergie dans la phase de recharge ;
déterminer (450), sur la base du premier paramètre, un deuxième courant émis par le premier convertisseur CC/CC de chaque unité de stockage d'énergie, le deuxième courant émis par le premier convertisseur CC/CC de chaque unité de stockage d'énergie vers la batterie de traction étant proportionnel au premier paramètre de l'unité de stockage d'énergie ; et
envoyer (460) un deuxième signal de commande au premier convertisseur CC/CC de chaque unité de stockage d'énergie, le deuxième signal de commande étant utilisé pour commander le premier convertisseur CC/CC afin d'émettre le deuxième courant vers la batterie de traction, de sorte à amener le premier convertisseur CC/CC de chaque unité de stockage d'énergie à recharger la batterie de traction avec le deuxième courant.

3. Procédé de recharge (40) selon la revendication 1 ou 2, dans lequel le premier paramètre de chaque unité de stockage d'énergie comprend au moins l'un des paramètres suivants :
état de charge SOC actuel de la batterie de stockage d'énergie de chaque unité de stockage d'énergie ;
tension actuelle de la batterie de stockage d'énergie de chaque unité de stockage d'énergie ; et
tension actuelle de chaque unité de stockage d'énergie.

4. Procédé de recharge (40) selon l'une quelconque des revendications 1 à 3, dans lequel l'appareil de recharge comprend en outre une unité de séparation, l'unité de séparation étant connectée entre les N unités de stockage d'énergie et la batterie de traction, et l'unité de séparation comprend M deuxièmes convertisseurs CC/CC et un module de commutateur connecté entre les M deuxièmes convertisseurs CC/CC, M étant un entier positif supérieur ou égal à 2 ; et
le procédé de recharge (40) comprend en outre les étapes consistant à :
commander le module de commutateur afin que les M deuxièmes convertisseurs CC/CC soient connectés en série, de telle sorte que la tension émise par l'unité de séparation vers la batterie de traction soit M fois la tension émise par les N unités de stockage d'énergie ; ou
commander le module de commutateur afin que les M deuxièmes convertisseurs CC/CC soient connectés en parallèle de telle sorte que le courant émis par l'unité de séparation vers la batterie de traction soit M fois le courant émis par les N unités de stockage d'énergie.

5. Procédé de recharge (40) selon l'une quelconque des revendications 1 à 4, dans lequel l'appareil de recharge comprend en outre un convertisseur CA/CC, le convertisseur CA/CC étant connecté entre la batterie de traction et une alimentation électrique en courant alternatif, de sorte à amener l'alimentation électrique en courant alternatif à recharger la batterie de traction par l'intermédiaire du convertisseur CA/CC.

6. Appareil de recharge (100) destiné à une batterie de traction, dans lequel l'appareil de recharge (100) comprend : N unités de stockage d'énergie connectées en parallèle, chaque unité de stockage d'énergie comprenant une batterie de stockage d'énergie et un premier convertisseur CC/CC connecté à la batterie de stockage d'énergie, et chaque période de recharge de l'appareil de recharge (100) comprenant une phase dans laquelle la batterie de traction (210) est rechargée et une phase dans laquelle la batterie de traction (210) se décharge vers les N unités de stockage d'énergie, N étant un entier positif supérieur à 1 ; et
un module de commande (160), conçu pour :
commander l'appareil de recharge (100) afin de recharger, durant la phase dans laquelle la batterie de traction est rechargée, la batterie de traction (210) ; et
commander l'appareil de recharge (100) afin de décharger la batterie de traction (210) vers les N unités de stockage d'énergie pendant la phase de décharge, la décharge de la batterie de traction (210) vers les N unités de stockage d'énergie comprenant les étapes consistant à :
obtenir un premier paramètre de chaque unité de stockage d'énergie dans la phase de décharge ;
déterminer, sur la base du premier paramètre, un premier courant émis par le premier convertisseur CC/CC de chaque unité de stockage d'énergie vers la batterie de stockage d'énergie, le premier courant émis par le premier convertisseur CC/CC de chaque unité de stockage d'énergie étant inversement proportionnel au premier paramètre de l'unité de stockage d'énergie ; et
envoyer un premier signal de commande au premier convertisseur CC/CC de chaque unité de stockage d'énergie, le premier signal de commande étant utilisé pour commander le premier convertisseur CC/CC afin d'émettre le premier courant vers la batterie de stockage d'énergie, de sorte à amener le premier convertisseur CC/CC de chaque unité de stockage d'énergie à recevoir, avec le premier courant, l'énergie électrique libérée par la batterie de traction (210).

7. Appareil de recharge (100) selon la revendication 6, dans lequel la recharge, durant la phase dans laquelle la batterie de traction est rechargée, de la batterie de traction comprend en outre les étapes consistant à :
obtenir le premier paramètre de chaque unité de stockage d'énergie dans la phase de recharge ;
déterminer, sur la base du premier paramètre, un deuxième courant émis par le premier convertisseur CC/CC de chaque unité de stockage d'énergie vers la batterie de traction, le deuxième courant émis par le premier convertisseur CC/CC de chaque unité de stockage d'énergie étant proportionnel au premier paramètre de l'unité de stockage d'énergie ; et
envoyer un deuxième signal de commande au premier convertisseur CC/CC de chaque unité de stockage d'énergie, le deuxième signal de commande étant utilisé pour commander le premier convertisseur CC/CC afin d'émettre le deuxième courant vers la batterie de traction, de sorte à amener le premier convertisseur CC/CC de chaque unité de stockage d'énergie à recharger la batterie de traction (210) avec le deuxième courant.

8. Appareil de recharge (100) selon la revendication 6 ou 7, dans lequel le premier paramètre de chaque unité de stockage d'énergie comprend au moins l'un des paramètres suivants :
état de charge SOC actuel de la batterie de stockage d'énergie de chaque unité de stockage d'énergie ;
tension actuelle de la batterie de stockage d'énergie de chaque unité de stockage d'énergie ; et
tension actuelle de chaque unité de stockage d'énergie.

9. Appareil de recharge (100) selon l'une quelconque des revendications 6 à 8, dans lequel l'appareil de recharge (100) comprend en outre une unité de séparation (130), l'unité de séparation (130) étant connectée entre les N unités de stockage d'énergie et la batterie de traction (210), et l'unité de séparation (130) comprend M deuxièmes convertisseurs CC/CC et un module de commutateur (133) connecté entre les M deuxièmes convertisseurs CC/CC, M étant un entier positif supérieur ou égal à 2 ; et
le module de commande (160), est en outre conçu pour :
commander le module de commutateur (133) afin que les M deuxièmes convertisseurs CC/CC soient connectés en série, de telle sorte que la tension émise par l'unité de séparation (130) vers la batterie de traction (210) soit M fois la tension émise par les N unités de stockage d'énergie ; ou
commander le module de commutateur (133) afin que les M deuxièmes convertisseurs CC/CC soient connectés en parallèle de telle sorte que le courant émis par l'unité de séparation (130) vers la batterie de traction (210) soit M fois le courant émis par les N unités de stockage d'énergie.

10. Appareil de recharge (100) selon l'une quelconque des revendications 6 à 9, dans lequel l'appareil de recharge (100) comprend en outre un convertisseur CA/CC (140), le convertisseur CA/CC (140) étant connecté entre la batterie de traction (210) et une alimentation électrique en courant alternatif (150), de sorte à amener l'alimentation électrique en courant alternatif (150) à recharger la batterie de traction (210) par l'intermédiaire du convertisseur CA/CC (140).

11. Système de recharge (10) comprenant :
une batterie de traction (210) ; et
l'appareil de recharge (100) selon l'une quelconque des revendications 6 à 10, dans lequel l'appareil de recharge (100) est conçu pour recharger la batterie de traction (210), et chaque période de recharge comprend une phase dans laquelle la batterie de traction (210) est rechargée et une phase dans laquelle la batterie de traction (210) se décharge.
